# EUROPEAN PATENT APPLICATION

(11) **EP 3 782 464 A1**
(43) Date of publication of application: **24.02.2021**
(21) Application number: 19020487.5
(22) Date of filing: 21.08.2019
(51) Int. Cl.: A01K 47/06, A01K 51/00

(54) **METHOD AND EQUIPMENT FOR CLIMATISATION AND DISINFECTION OF THE BEEHIVES**

(71) Applicant: Freschi, Marco, 42020 San Polo d'Enza (RE) (IT)
(72) Inventor: Freschi, Marco, 42020 San Polo d'Enza (RE) (IT)

(57) **Abstract**

The present invention relates to a method and equipment for the thermostatic management of the climate control of beehives (6) with a thermal source (3) located in a position within the beehives to determine a stratification of the temperatures, humidity and electromagnetic fields of the beehives. The application of the invention determines the reduction of the thermal stress of bees caused by climate change and increases the disinfection of beehives from pests and infesting mites.

## Description

### State of the art - Background of the invention:

Climate changes, together with the increase in apis mellifera pests, are causing an alarming decrease in the hives caused by the increase in stress conditions of bees. At the present state of the art the solutions put in place for the management of climatic problems are essentially linked to the insulation of the beehives or to their thermal protection in the winter periods. These devices have a low effectiveness since they do not allow a punctual and optimized control of temperatures but above all because they do not allow to manage the climatic mismatches in equal way in spring and summer periods. In fact, spring is the most critical period for the development of beehives, which after the winter are about to resume the brood and then the reproduction and also proceed with the harvest of nectar, honeydew and pollen. In recent years, due to climate change, there has been an increasingly frequent thermal difference between day and night hours or more generally between the different days of the same season, this situation causes an important stress for the bees because while during the day with mild temperatures the beehive and in detail the queen bee is induced to lay the brood, at night the temperatures often lower than the seasonal averages determine a serious stress for the bees that are forced besides to consume large honey stocks to maintain the temperatures necessary for maintaining the brood (approx. 32 ° C). In some cases even, if the thermal lowering is prolonged for several days, the beehives even go so far as to abandon the brood making it die with everything that follows from the point of view of the "vital energy balance" of the beehive.

As mentioned, the beehive insulation systems available on the market today are not fully effective in combating these climatic stress situations and in addition, as the summer season progresses, they risk even causing damage to the beehives due to the increase in outside temperatures that involve difficulty cooling of the so insulated beehives.

In summary, therefore, these solutions are not very flexible and therefore not very effective, they also cause poor practicality in that they force the beekeeper to remove the insulation or to transfer the families of bees. On the market today there are also more advanced solutions which include climate control of beehives by solar radiation or electric heating using energy-consuming techniques, even these solutions are not very effective and functional for the following reasons:
a) solar heating: the beehives must be exposed directly to the sun, therefore a geo-spatial location constraint is determined which in some cases can become counterproductive in periods of greater solar radiation and higher external temperatures (overtemperatures). These systems do not solve the problems related to the time difference between day and night.
b) electric heating: these solutions currently available on the market generally require a high energy requirement that is not compatible with the location of the hives usually away from the electricity distribution networks. Also in this case the beehives were in adherence to points of availability of electric network the high consumptions would not determine a marked economic convenience for their systematic use. Not only that, the techniques available today involve an important cost of installation and above all a scarce practicality of use. In fact, there is the case of techniques and equipment, like Pat. No WO 2015/087197 A1 (TAGLIAFERRI MAURO [IT]) 18 June 2015 (2015-06-18), that provide for the replacement of the normal frames used by the bees with special frames with thermostatically controlled electric resistors inside; in this it is easy to understand how this solution determines first an important interference with the habits of bees that find themselves living on frames with plastic structures (resistances) which, besides not being at all natural and therefore biological, interfere with the communication needs of bees. It is in fact known that bees inside the beehives communicate through vibrations that in the case of heated frames are distorted or even contrasted. For the beekeeper, and in particular for the one already in business, the introduction of this technical solution also entails an economic problem due to the quantity of frames to be replaced and furthermore impractical in that it is not possible to immediately replace all the frames leaving the bees without built cells, this condition determines long commissioning times and an important labor requirement. As far as the management of parasites is concerned, or more specifically the infestation of bee mites, the current state of the art has not yet provided resolutive answers, moreover the techniques mainly used today prevent chemical treatments sometimes potentially harmful even for the beekeeper or methodologies impractical like "the brood block" which requires the confinement of the queen. There are also thermo-therapeutic solutions that aim to contain the varroa mite proliferation by raising the temperature. A type of heat treatment envisages extracting the brood from the hive by inserting it in special ovens, in this case the main problem is of a practical nature or linked to the quantity of labor required to carry out the procedure. Other types of thermo-therapeutic solutions, like US Pat. No. 2002/151249 A1 (SCHEUNEMAN THEODORE W [CA] ET AL) 17 October 2002 (2002-10-17) involve the use of chemicals such as formic acid which, in addition to entailing additional costs for beekeepers, determine damage to bees and phenomena of drug resistance for mites. Other types of heat climate control, like US Pat. No. 2017/208779 A1 (RUBRIGHT TODD [US]) 27 July 2017 (2017-07-27) involve homogeneous or generalized heat treatment of the entire hive, mainly involving problems with energy consumption or possible situation of high thermal stress for adult bees; these equipment also require special hives or important changes to the hives that make the equipment difficult to use for beekeepers.

The invention described below aims to answer the problems arising from climate change and bee parasites while overcoming the critical issues described above with regard to the current state of the art.

### Summary of the invention

Object of the present invention is a method and an equipment which allows the thermostatic management of the climate control of the beehives for overcoming the criticalities linked to climate change as well as for containing the damage and parasites of the beehive. The basic idea of the present invention consists in creating an uneven climatic condition of the beehives with localized thermal source located in a position inside the beehive so as to allow a stratification of the temperatures, humidity and electromagnetic fields thus creating inside of the beehives areas with different temperatures, humidity and electromagnetic fields. Close to the thermal source we will therefore have higher temperatures, more contained humidity and more intense electromagnetic fields, as we move away from the thermal source the temperatures and humidity tend to normalize, aligning themselves to the external environmental conditions this due to the dispersions of the hive same. The electromagnetic fields are attenuated as they move away from the source of emission, therefore they will be more intense in the areas with higher temperature, that is, close to the emitting source and less intense as you move away from it. The creation of the said thermohygrometric and electromagnetic stratification through the climatic regulation of the temperature inside the beehive involves the following benefits and the achievement of the following purposes:
- Regardless of the external climatic conditions, the invention allows constant maintenance, at low energy consumption, of a localized area suitable for the development of the brood within the beehive. This condition makes it possible to manage and make sustainable the spring recovery of the brood by optimizing the development of the family, for example in the pre-harvest spring period. It also allows the bees to reach stocks or support foods in any external weather condition avoiding the phenomenon of starvation in the beehive.
- Reduction of stress and consumption of stocks by the beehive to cope with thermal declines deriving from exogenous thermal shocks;
- Significant increase in bees development aimed at creating and then selling new beehives;
- Significant increase in the production of honey and other hive products. The correct climatic conditions avoid a marked consumption of honey stocks allowing the bees to be so more productive;
- Greater longevity and vitality of bees: it is well known that the temperature of the brood influences the longevity and vitality of the bees, in fact at higher brood temperatures corresponds to a greater longevity of the bees and therefore corresponds to a greater strength of the beehive. In fact, if the pupae are exposed to lower temperatures than the optimal ones (34-35 ° C), they achieve harmful effects on short-term learning, memory skills and orientation. McMullan and Brown (2005) have shown that developing brood temperatures below optimal temperatures make the bees more susceptible to tracheal mites. This invention, by guaranteeing constant temperatures greater than those normally guaranteed by bees alone, also determines this additional non-secondary beneficial effect;
- Discrepancy of the development time of the brood with respect to the varroa mite development time: the constant high temperatures guaranteed by the invention accelerate the development of the brood and consequently involve births of bees in less time than those necessary for the varroa mite for its development. The result is a decrease in the reproduction of the parasite;
- Possibility to open and manage the beehives even at times when outside temperatures would normally not allow it;
- Maintaining the optimal heating conditions of the beehive results in no need for heating by the bees and therefore determines the removal of foraging bees from the brood area with consequent release of space and then induction the foraging bees to collect the natural products (nectar, pollen, etc.) or artificial feed and therefore provide for an increase in the productivity of the beehive;
- Neat stratification of the various caste species inside the beehive. In fact, nurse bees, that is younger and therefore more resistant to high temperatures, will concentrate close to the brood and then in the thermo-heated area, leaving the older bees (foragers) free to move to the less hot areas and therefore more suitable for their conditions of endurance Thermal. This order in addition to being decisive for the disinfection of the hive as described in the following points is also useful in order to optimize the development of the hive by avoiding concentrations of bees not essential to the development of the brood that would hinder the work of the queen bee and their attendants;
- Relative humidity reduction especially in the brood area, this aspect as well as preserving bees from the development of mold and other pathogens has an important effect for what concerns the stimulation to the "grooming" (see next point) and to the dehydration of the 'varroa mite;
- Selective thermal-dehydrating disinfection: the distribution of bees by temperature bands inside the hive or the concentration of the brood in the hottest part of the hive forces the varroa mite to move progressively passing from foraging bees, those coming out at 'external are generally carriers of the disease, to bees who take care of the brood that reside in an area of high temperature and low humidity and therefore tend to be inhospitable for the mite. It is in fact known that the varroa mite above 38 ° C starts to suffer damage and furthermore besides these temperatures it is disoriented and therefore less effective in reaching the only brood suitable place for its reproduction. The brood of bees being inside the wax cells placed orthogonally with respect to the heat source is protected from high temperatures and humidity reduction;
- Contrast the development of bee mites as a function of the electromagnetic field induced by the passage of direct and alternating current in the resistances (heat sources), such electromagnetic fields due to their modest intensity are harmless for bees while they are disorienting and lethal for mites with a decidedly lower body size than bees. Said mites approaching the brood of bees to carry out their reproductive functions encounter an ever more intense magnetic field that disorients them and kills them hindering the achievement of the brood. The brood of bees being inside the wax cells placed orthogonally with respect to the electromagnetic sources (resistances) is protected by these electromagnetic fields;
- Limitation of pest infestation with consequent reduction of damage caused to the beehives;
- Possibility to manage pesticide treatments (eg oxalic acid, thymol, etc.) regardless of the external climatic conditions this in the case of important and aggressive parasites require an additional treatment at times of the year in which the low temperatures and therefore the presence of glomere in the beehive wouldn't allow it;
- Increased "Grooming" effect of the hive: as described in "The effect of temperature and humidity on grooming behavior of honeybee, Apis mellifera (Hym .: Apidae) colonies against mild varroa, Varroa destructor (Acari: Varroidae)" GH Tahmasbi Iranian Research Institute of Plant Protection, Tehran, Iran, the increase in temperature and the lowering of humidity increase the tendency of bees to activate hygienic cleansing phenomena better known as "Grooming" which determine a further disinfecting effect on varroa. Furthermore, the orderly distribution of bees inside the hive determined by thermal stratification further facilitates the "Grooming" effect as the bees find more space and also because the foraging bees are found in areas with lower temperatures than the usual temperatures of brood and therefore in milder climatic zones and therefore usually more favorable to stimulate the "Grooming" effect;
- Reduction in tendency to ascent of the varroa mite fallen on the beehive bottom. Because of the thermal stratification of the hive as a consequence of the localized point-like thermal source introduced by the invention, the parasites and mites that fall from the bees at the bottom of the hives find, at least for most part of the year, temperature conditions that are not compatible with their life, therefore the risk of re-infestation due to the ascent of fallen pests is reduced;
- Constant stimulation of the queen to the oviposition: the correct climatic conditions allow the queen to remain constantly engaged in the activity pertaining to it or of the egg-laying; from the experience, constantly active queen bees are more prolific and less prone to swarming.

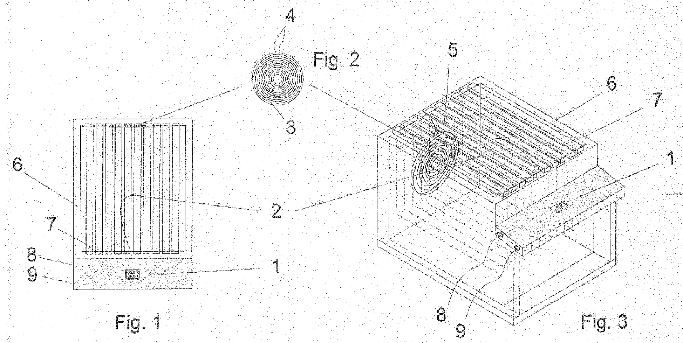

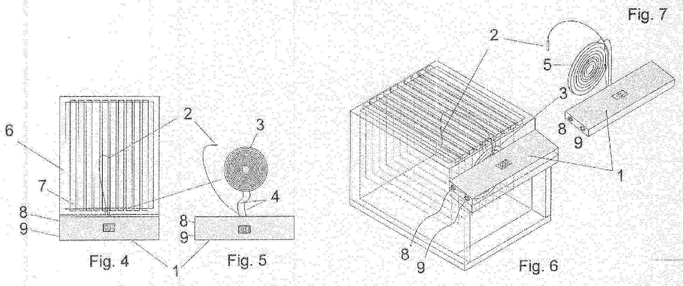

The subject of the present invention is a system consisting of an electronic thermostatic regulator with display for viewing the temperature inside the hive and for setting the set-point temperature. This regulator can be integrated to the hive (see element 1 - Figures 1,3) or it can be applied to any type of hive as an external component separated from it (see element 1 - Figures 4,5,6,7,8,9). In any case, the regulator, or its reading and temperature setting organs, are accessible to the operator without coming into contact with the bees. The regulator is connected by wiring or by radiofrequency to one or more temperature probes placed inside the hive (see element 2 - Figures 1,3,4,5,6,7,8). It is also connected to one or more resistances placed inside the hive in the various positions chosen (element 3 - Figures 1,2,3,4,5,6,7,8). The resistance (s) are interchangeable by rapid connections (see elements 4 - Figures 2,5,8,10,11) with other types of resistances having different temperatures and operating powers. The power supply of the regulator (see element 8 - Figures 1,3,4,5,6,7,8,9) can take place with connection to the electricity grid through a suitable power supply unit or through the connection to an off-grid photovoltaic system (see element example 12 -

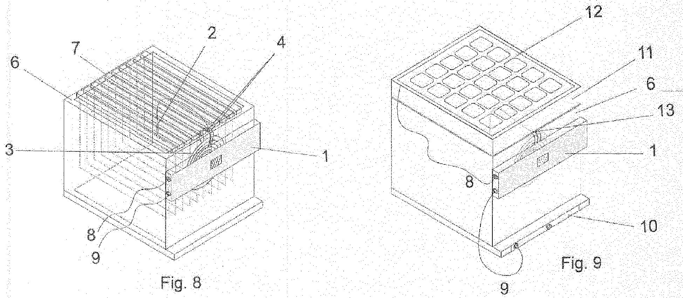

Figure 9) οr median hybrid system that sees the photovoltaic in parallel mode to the electric network. The regulator has one or more exits (see element 9 - Figures 1,3,4,5,6,7,8,9) for the management of an optional accessory (see element 10 - Figure 9) which allows to create one thermal shock and or sublimation of organic acids (oxalic, formic) for the management of more aggressive mite infestations. This accessory is optionally inserted into the hive or through the anti-varroa bottom drawer or through other possible openings. The regulator can manage the accessory automatically.

A particular object of the present invention is a method and an apparatus for the conditioning and disinfection of the hives, as better described in the claims, which form an integral part of the present description.

### Brief description of the drawings

Further aims and advantages of the present invention will become clear from the following detailed description of some embodiments thereof (and of its variants) and from the annexed drawings given purely as example and therefore non-limiting, in which:
- **Figure 1** shows an example of a beehive 6 with its nest frames 7 seen from above on which the system of the present invention is integrated: 1 thermostatic electronic regulator integrated in the beehive, 2 temperature probe e, 3 resistance e, 8 input power supply regulator, 9 output for managing optional components;;
- **Figure 2** shows a type of resistance 3 with the rapid electrical connections 4 which can also act as a support for the resistance 3 once positioned inside the beehive;
- **Figure** 3 shows the same arrangement as in Figure 1, there is beehive with its frames 7 seen in isometric axonometry where the system of the invention is integrated: 1 thermostatic electronic regulator integrated in the beehive, 2 temperature probe (one or more), 3 resistance (one or more), 5 thermal insulation placed behind the heating element, 8 power supply input regulator, 9 output for managing optional components;
- **Figure 4** shows an example of a beehive 6 with its frames 7 seen in plan from above on which the system according to the present invention is applied: 1 thermostatic regulator applied in an easily removable or non-integrated way to the hive by means of fasteners rapid, 2 one or more temperature probe, 3 one or more resistance, 8 input power supply regulator, 9 output for the management of any optional components;
- **Figure 5** shows an example of the system object of the invention seen from above with its main components: 1 thermostatic regulator applied in an easily removable or non-integrated way to the beehive by means of rapid fasteners, 2 one ore more temperature probes, 3 one or more resistance, 4 rapid electrical connections which also act as a support for the resistance, 8 input for regulator power supply, 9 output for managing any optional components;
- **Figure 6** shows the same arrangement as shown in Figure 4, there is a beehive with its frames 7 seen in isometric axonometry on which the system according to the present invention is applied: 1 thermostatic regulator applied in an easily removable or non-integrated way to the hive quick fasteners, 2 one or more temperature probe, 3 one or more resistance, 8 electrical power supply input regulator, 9 output for managing any optional components;
- **Figure 7** shows an example of the system of the invention seen in isometric axonometry with its main components: 1 thermostatic regulator applied in an easily removable or non-integrated way to the hive by means of rapid fasteners, 2 one or more temperature probe, 3 one or more resistance, 5 example of possible thermal insulator placed behind the heating element, 8 regulator power supply input, 9 output for managing any optional components;;
- in **Figure 8**, a different type of beehive 6 is represented by way of example with its frames 7 seen in isometric axonometry on which the system of the present invention with its main components is applied in a different external position, it is possible to see: thermostatic regulator applied in an easily removable way or not integrated in the hive by means of quick fasteners, 2 one or more temperature probe, 3 one or more resistance, 4 electrical connections for the internal and external resistance supply, 8 input for regulator power supply, 9 output for managing any optional components;
- **Figure 9** shows an example of the same type of beehive 6 described in Figure 8 complete with the lid 11 with a photovoltaic power supply 12 viewed in isometric axonometry on which the system of the present invention is applied in an external position with its main components visible externally: 1 thermostatic regulator applied in an easily removable way or not integrated into the hive by means of rapid fasteners, 8 regulator electric power input through connection with photovoltaic module 12, 9 optional component management and power supply output 10 inserted in the bottom of the beehive 6. From the figure it clearly emerges the passage of the wiring 13 that occurs between the body of the beehive and its cover 11 without foreseeing modifications or physical interventions on the beehive 6. The system is therefore conceptually and practically applicable, without modifications or interventions structural, on any existing beehive regardless of model or age of the beehive;

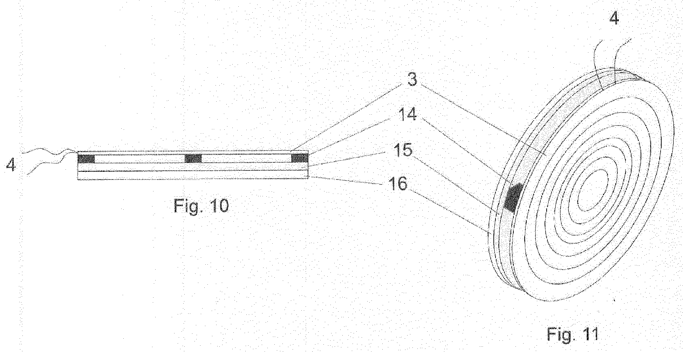

- **Figure 10** shows in detail the enlarged section of the resistor 3 and its insulating system 5. Are indicated: the insulating spacers 14, the insulating film 15 and the support system 16 planned to give the strength and rigidity to insulating system 5 and then to the resistance 3 as a whole;
- **Figure 11** shows in detail the enlarged section of the resistance 3 and its insulating system 5 views in isometric axonometry. Are indicated: the insulating spacers 14, the insulating film 15 and the support system 16 planned to give the strength and rigidity to insulating system 5 and then to the resistance 3 as a whole.

The same reference numbers in the various figures indicate the same elements or components.

### Detailed description of embodiment examples:

With reference to the element 1 shown in Figures 1,3,4,5,6,7,8,9, the thermostatic electronic regulator object of the invention can be divided into its hardware and software components.

The hardware section consists mainly of:
- Display for displaying temperatures and setting them;
- Electronic card for the management of the power supply operations of the resistors and any kind of accessory components;
- Relay for supplying resistances and any accessory components;
- Outputs with quick couplings for connecting resistances and temperature probes;
- Temperature probe for internal and\or external temperature measurement;
- Any radio antennas for communication with temperature probes or with accessory components;
- Input 8 with quick connection for electric power supply with direct or alternating current;
- Outlets 9 with quick connections for managing and supplying accessory components as described above;
- Fast fixing systems to the hive using magnets or other fast fixing systems;

The software section consists mainly of temperature(s) management by reading the sensors and managing the relays and therefore the resistances. The software could allows the optimized management of processes and allows functions of temperature set-point variation during the day and of the week, also analyzing the external temperatures using special probes. The software could also allows the management of any optional accessory components 10 with the aim of carrying out any additional chemical or thermal treatments for the emergency disinfestation of the beehive.

With reference to **Figures 1 and 3**, examples of beehives are depicted with the system of the present invention integrated, in this case the regulator 1 is fixed integrally to the hive 6 by mechanical connection (like screws) while its individual components 2,3 can however still be replaced or eliminated quickly to facilitate cleaning operations by means of rapid connections. The connection wirings 4 can be connected to the integrated or not integrated electric terminals inserted internally in the beehive 6. The resistance 3 is simply placed between the inner wall of the beehive 6 and the frames 7, in this way it is easy and quick to install or remove the resistence independently of the structural components of the beehive 6 and of the frames 7 where the bees lives and develops. This technical solution also involves a reduced interference with the activities of the bees as it does not modify or contaminate the normal wax supports where the bees live and develop themselves. The optional thermal insulation 5 placed behind the resistance has the function of preventing the dissipation of the heat generated by the resistance and outside the hive. Said insulator 5 is structured as shown in detail in figures 10 and 11.

With reference to **Figure** 2 there is shown an example of resistance 3 managed by the regulator described above. The electrical connections 4 of the resistor are visible, which can be connected to the power supply terminals integrated or not to the beehive by means of rapid connections. As said, this resistance 3 can be positioned inside the hive in the desired positions or where the connection terminals are available, there can also be more resistances installed simultaneously in the same zone or position. These resistances 3 are interchangeable by means of quick couplings to modify the maximum temperatures and the desired powers (example of tested power and temperatures: 6W - Tmax resistance surface 40 ° C, 14W - Tmax resistance surface 50 ° C, etc.). Resistors 3 are made of stable synthetic materials suitable for contact with food and animals that can be washed and sterilized.

With reference to **Figures 4 and 6** there are shown examples of types of beehives similar to that indicated in Figures 1 and 3 but with the system object of the present invention not integreted to beehive, in this case the regulator 1 can be applied or separated from the apiary simply by means of rapid connections, in this way it can also be applied to existing beehives without requiring adaptation operations, structural modifications or any holes. Even the individual components 2 and 3 can be easily replaced or eliminated to facilitate cleaning operations by rapid connections. Also in this case the resistance 3 is simply placed between the inner wall of the hive 6 and the frames 7, in this way it can be easily and quickly installed and removed independently of the structural components of the hive 6 and of the frames 7 where the bees lives. This technical solution also involves a reduced interference with the activities of the bees as it does not modify or contaminate the normal wax supports where the bees live and develop themselves. The connection wirings 4 are external to the hive structure passing between the body of the beehive and its cover (element 13 - Figure 9), in this way it is not necessary to modify or adapt the beehive 6 for example with holes or other. Said wiring 4 can also act as a support both for the resistor 3 and its thermal insulation system 5 as well as for the regulator 1.

With reference to **Figures 5 and 7**, the system object of the invention is shown in plan view (figure 5) and in isometric axonometry (figure 7), with its main components: 2 temperature sensor(s), 3 resistance(s), 4 output electrical wirings, 5 any resistance thermal insulation, 8 power supply input, 9 any accessories control and power supply (item 10 - figure 9). The regulator 1 being exposed to atmospheric agents can be coated with metal elements similar to those normally used for the components of beehives or plastic or in any case suitable for the purpose.

The optional thermal insulation 5 located behind the heating element 3 has the function of preventing the dissipation of the heat generated by the resistance 3 outside the hive. Said insulator 5 is structured as shown in detail in figures 10 and 11.

With reference to **Figures 8 and 9**, examples of beehives of construction types different from those shown in Figures 1, 3, 4 and 6 are shown; in this way it is immediate to understand how the system object of the invention can be applied to different types of beehives without requiring adaptation operations, structural modifications or any holes. Figure 8 represents a beehive 6 where the system object of the present invention is removably applied by means of rapid attachments (magnetic, etc.) on the external front wall. Even the individual components 2 temperature sensor(s) and 3 resistance(s) can be easily replaced or eliminated to facilitate cleaning operations through quick connections. The connection wirings 4 are external to the beehive, these wirings passing between the body of the beehive and its cover (element 13 - Figure 9), in this way it is not necessary to modify or adapt the beehive 6 for example with holes or other. Figure 9 depicts the same beehive 6 present in Figure 8 but complete with the cover 11 and a photovoltaic panel 12 to which the power supply of the thermostatic electronic regulator 1 is connected. As previously stated, the power supply by photovoltaic panel in off-grid mode is only one of the possible options for feeding the system object of the present invention. Thanks to the connection 9, any optional accessory 10 for example inserted at the base of the beehive is also managed and fed for the additional chemical and thermal treatments that may be necessary for emergency disinfesting treatments. The passage of the cables 4 takes place between the body of the beehive 6 and its cover 11 (element 13 - figure 9) and therefore independently of the structure of the beehive 6, said wirings passes between the structure of the beehive and any element of it is superimposed such as for example the lid 11 or supers, etc., in this way it is not necessary to modify and adapt the structure of the beehives for the passage of these cables. With reference to **Figures 10 and 11**, examples of resistors 3 are shown with the construction detail of the insulating system 5. The optional thermal insulation 5 is placed behind the resistance 3 and has the function of preventing the dissipation of the heat generated by the resistor outside of the beehive. Said thermal insulator 5 is structured by a plastic support 16 having the function of giving rigidity and resistance to the whole of the resistance 3 and insulator 5 composed of a material acting as thermal insulator 15 such as cork or similar insulating elements. These insulating system 5 is then held anchored to the resistor 3 with some spacers 14 also produced with insulating material, inserted in order to limit the conduction of heat towards the elements 15 and 16 and then outwards. Said spacers 14 also allow the air inside the hive to create a convective motion which, in addition to acting as an element of further thermal efficiency, also determines a greater effectiveness for the climate control and disinfestation of the beehives 6.

Other possible embodiments of the described examples are possible without departing from the scope of protection of the present invention, comprising all equivalent embodiments. Said embodiments are provided as illustrative examples and therefore with non-limiting purposes. The elements and characteristics illustrated in the various embodiments and examples of applications can be combined with one another without however leave from the scope of protection of the present invention.

The advantages deriving from the application of the present invention are clear. The system object of the present invention allows, by means of a thermostatic regulation of the localized climate control with a point heat source of the beehive, to contrast and overcome the problems introduced by climate change or by infestation of pathogens and bees parasites in order to reduce stress and therefore mortality of the "apis mellifera". This system stands out by overcoming the known art thanks to the reduced energy consumption due to localized climate control as well as the great practicality of installation that does not necessarily require modifications of the beehives and their components (ex frames 7) already in use by beekeepers. Furthermore, the system described here reduces interference with bees and their activities with respect to other solutions, is flexible with respect to sudden climate changes, increases productivity, facilitates beehive management by beekeepers and therefore increases profitability in beekeeping, contrasts the pathogens of the apis mellifera therefore limiting the use of synthetic and natural disinfection products with what derives from them in terms of economy and production quality in the field of beekeeping. From the description given above, the person skilled in the art is able to carry out the object of the invention without introducing further construction details.

## Claims

1. Equipment suitable and functional to the thermostatic management of the climate control of the beehives to allow disinfection of pests, mites and to counteract the effects of climate change on bees, **characterised in that** it comprises:
- one ore more point source of heat production (3) applied but not integrated with the beehives (6) or its frames (7), located in a position in the side walls inside any type of beehives (6) in perpendicular way to the frames (7) to determine a stratification not uniform of the temperatures and humidity inside of the beehives (6);

2. Equipment according to claim 1, **characterised in that** it comprises an thermostatic electronic regulator (1) for thermostatic regulation of the climate inside beehives by processing the data collected by internal temperature probes and eventual external temperature probes and consequent management of the heat sources (3) is it applicable in fixed or mobile mode with or without rapid fixings to any type of beehives (6). Said thermostatic electronic regulator (1) is **characterized by** what its body comprises:
- one or more electronic boards for data processing;
- a dedicated software;
- eventual displays visible from the outside without the opening of the beehives (6);
- one or more relays for the automated manage of the heat sources (3);
- eventual temperatur probes for reading external temperatures;
- one or more power supply inputs (8);
- one or more outputs for manage the heat sources (3) and for reading the temperature probes (2);
- eventual supply and accessory outputs (9);
- eventual fast fixings such as magnets, or similar, or alternatively one or more static fastening elements to the beehives (6) such as screws or similar;

3. Equipment according to claim 1, **characterised in that** it comprises an one or more temperature sensors (2) for the punctual reading of internal temperature values to the beehives and eventual external temperature values, these temperature sensors (2) are placed inside any type of beehives (6) and are connected by wiring or radio waves to the thermostatic electronic regulator (1);

4. Equipment according to claim 1, wherein said source of heat production (3) are electric resistors operating on direct or alternating current, placed inside any type of beehives (6) which in addition to the thermal production also determine an electromagnetic field also functional to the disinfection of the beehives;

5. Equipment according to claim 1, wherein said source of heat production (3) are supported by their connections (4) or with adhesive fixings, positioned between the walls of beehives (6) and the frames (7) or between the frames (7) themselves;

6. Equipment according to claim 1, wherein said heat sources (3) are provided with an insulating system (5) located behind the heat sources (3) having the function of preventing dissipation of the heat generated by the heat sources (3) outside the beehives;

7. Equipment according to claim 1, wherein said any optional additional accessories (10) are possibly managed and powered by the thermostatic electronic regulator (1) and perform the sporadic function of additional heating and/or sublimation function of organic acids for the shock treatment of bees's mites;

8. Method for the point climatization with thermohygrometric and possibly electromagnetic stratification of the beehives with consequent disinfection of the parasites of the apis mellifera, suitable for using an equipment according to claim 1, **characterised in that** it comprises the following steps:
- heating beehive to a temperature sufficient to hinder mites, pests development and\or kill possible mites, pests;
- controlling the temperature of said beehive (6) so that it remains below a predetermined temperature suitable for not killing the eggs, larvae, pupae and adult bees;

9. Method for the climatic treatment with thermohygrometric and possibly electromagnetic stratification of the hives according to claim 8, **characterized in that** the thermostatic electronic regulator (1) automatically performs the progressive lowering and raising cycles of the power supply capacities of the resistances (3) so that to create changes in temperature, humidity and electromagnetic fields such as to increase the abatement of varroa mites;

10. An equipment and a method, as described in the preceding claims, for the punctiform climatization with thermohygrometric and possibly electromagnetic stratification with consequent disinfection of the beehives, **characterised in that** it comprises the step of heating all of any point source of heat production (3) simultaneously if the internal and/or external temperature of the beehive is below a predetermined temperature and heating them in sequence if the internal and/or external temperature of the beehive is above said predetermined temperature.
